# EUROPEAN PATENT SPECIFICATION

(11) **EP 2 413 213 B1**
(45) Date of publication and mention of the grant of the patent: **18.06.2014**
(21) Application number: 11173810.0
(22) Date of filing: 13.07.2011
(51) Int. Cl.: G05B 19/418

(54) **Field device**
Feldgerät
Appareil de terrain

(30) Priority: 27.07.2010 JP 2010168219
(43) Date of publication of application: 01.02.2012
(73) Proprietor: Yokogawa Electric Corporation, Tokyo 180-8750 (JP)
(72) Inventor: Yoshino, Hiroki, Tokyo 180-8750 (JP); Hagimoto, Mai, Tokyo 180-8750 (JP)
(74) Representative: Henkel, Breuer & Partner

(56) References cited:
- EP-A1- 2 023 327
- EP-A2- 2 403 301
- US-A1- 2010 061 703

## Description

### BACKGROUND

### Technical Field

Embodiments described herein relate to a field device which incorporates a battery as a power source and is housed in a pressure-resistant, explosion-proof container so as to be usable in a dangerous atmosphere.

### Related Art

General field devices such as pressure/differential pressure gauges, various flowmeters, thermometers, and valve positioners which are distributed in a plant, a factory, or the like are connected to a higher-level control computer system by a two-wire signal line, for example. Each field device exchanges current signals of 4 mA to 20 mA with the control computer system, whereby each field device generates power and sends collected data to a higher-level device.

In recent years, wireless field devices have been developed which incorporate a wireless communication unit and send detected or collected data to a control computer system by radio (*see* e.g., JP-A-2003-134030 and JP-A-2003-13426).

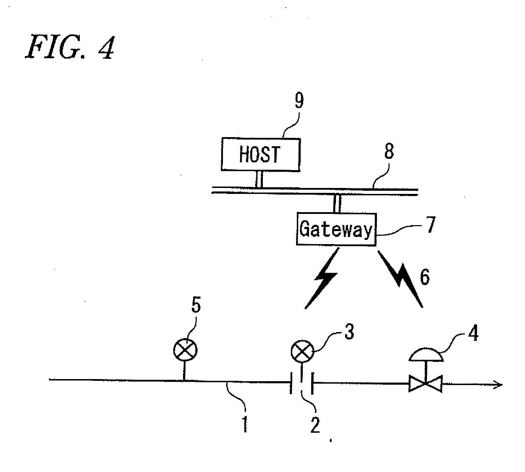

Fig. 4 is a functional block diagram of a communication system in which wireless communication is performed between a higher-level device and field devices. A differential pressure gauge 3 which measures a process flow rate on the basis of a pressure difference between flows upstream and downstream of an orifice plate 2 and a valve positioner 4 which controls the opening/closure of a control valve are connected to a process fluid pipe 1. Each of the differential pressure gauge 3 and the valve positioner 4 communicates with a relay apparatus such as a gateway 7 using a radio signal 6.

The gateway 7 has functions of a system manager which relays a communication between each of the field devices 3 and 4 and a host 9 via a communication network 8, for example, converts a communication signal, and manages a wireless communication device network and system.

The host 9 can receive process values, send control signals, set the field devices 3 and 4, and monitor alarm information by exchanging signals with the field devices 3 and 4 via the gateway 7.

A site-instruction-type field device 5 which measures a pressure, temperature, flow rate, or the like of a process fluid and does not perform wireless communication is also connected to the process fluid pipe 1. Among site-instruction-type field devices are ones that perform measurement and display all the time and ones that are used for a very long pipeline and powered on only when a worker comes to the site in making a round.

Such field devices that are distributed in a plant, a factory, or the like are usually disposed at places that are not suitable for wiring and are of a battery-driven type (i.e., they are not supplied with power by a two-wire line for transmission of signals of 4 to 20 mA). To enable long-term operation, a lithium primary battery is used.

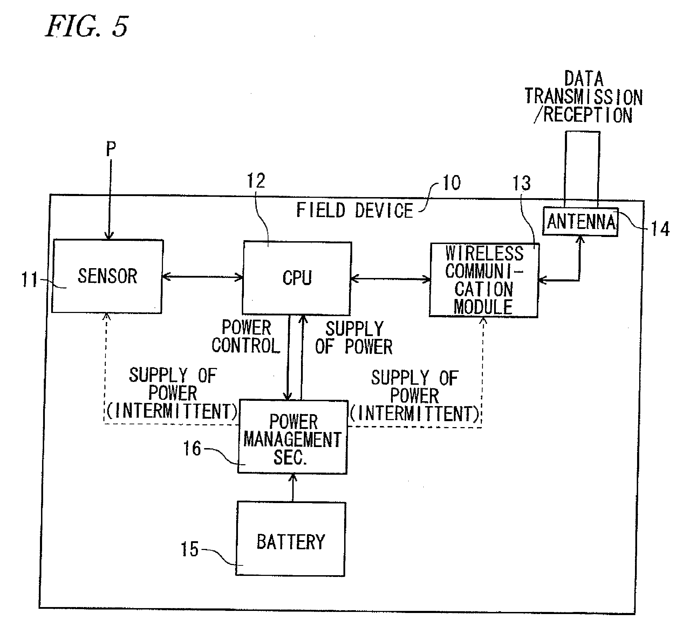

Fig. 5 is a functional block diagram showing an example configuration of a conventional field device 10 having a wireless communication unit. The field device 10 includes a sensor 11, a CPU 12, a wireless communication module 13, an antenna 14, a battery 15, and a power controller 16. The battery 15 can be attached or removed by opening the lid (not shown) of an explosion-proof container.

A process quantity P is detected and converted by the sensor 11. The CPU 12, which is a central processing unit, has a computing unit such as a microprocessor and a storage unit such as a RAM and an EEPROM. The CPU 12 converts, corrects, or converts, into a user-specified scaling value such as a percentage value, a process quantity P detected by the sensor 11.

The CPU 12 provides a calculation result to the wireless communication module 13, and then sends it to a higher-level device such as a host via the antenna 14. The CPU 12 receives a setting change request etc. from the user by radio via the antenna 14 and performs a setting change.

The CPU 12 controls and diagnoses the peripheral components such as the sensor 11, the wireless communication module 13, and the power controller 16 and, if a problematic diagnosis result is obtained, informs the user of failure information etc. via the wireless communication module 13.

The power controller 16 receives a voltage from the battery 15 and regulates it. The power controller 16 provides a necessary voltage to the CPU 12. Furthermore, the power controller 16 provides power to the sensor 11 and the wireless communication module 13 intermittently at a prescribed cycle by performing an on/off power control (switching) according to a user-specified intermittent operation cycle under the control of the CPU 12.

Wireless field devices are in a battery-removed state from shipment from a factory to immediately before installation at a site or a start of communication after installation. This is for the following reasons:
a) To prevent unnecessary use of a battery during transport or storage.
b) To prevent emission of possibly harmful radio waves during transport by a transport means such as an airplane.
c) To prevent emission of radio waves that violate regulations during transport (radio waves are restricted under the radio law of each country).

In general, field devices are not equipped with a power on/off switch. The use of a power on/off switch is difficult because they are used in a dangerous atmosphere and hence are required to have a pressure-resistant, explosion-proof structure etc.

Although it is conceivable to provide a switch inside the explosion-proof container of a field device, opening its lid to turn on or off the switch is a burden to the user. It is not permitted to open the lid at a place where pressure resistance and explosion proof are required. Therefore, in most cases, a field device is powered on by inserting a battery.

As a result, it is necessary for the user to insert a battery by opening the lid of the pressure-resistant, explosion-proof container of a field device and the close the lid after arrival of the field device, which is inconvenient. In a large plant, it may be necessary to install hundreds or thousands of field devices. In such a case, doing such work for all field devices not only increases personnel expenses but also increases, for example, the probability of occurrence of trouble due to scuffing of the lid of an explosion-proof container and danger in a pressure-resistant area due to incomplete closure of a lid.

Even if a battery is inserted into place and the lid of its explosion-proof container is closed in a safe area such as a user work bench area, the battery energy is consumed uselessly until installation or a start of regular communications after installation.

EP 2 403 301 A2 discloses a wireless field device that performs a wireless communication with other field devices in a wireless network through a gateway. The device includes: a battery incorporated in the field device to activate the field device; and a wireless communication module configured to exchange radio signals with the gateway to perform the wireless communication with said other field devices.

EP 2 023 327 A1 discloses an operation voltage controller and a method for controlling an operation voltage controller. The operation voltage controller has a display comprising a power supply for transforming the signal into a high voltage output and a low voltage output, a basic device functions means is supplied by the low voltage output such that an operation voltage is applied at the basic device functions means, and a back lighting means for back lighting a display of the signal powered field device.

US 2010/061703 A1 discloses an apparatus including an image recorder configured to record video images. The apparatus also includes a display screen configured to present the video images to a user and to create notations overlying one or more of the video images based on user input.

### SUMMARY OF THE INVENTION

Accordingly, it is an illustrative aspect of the present invention to make it possible to transport, to a dangerous atmosphere place, a field device in a state that a battery is set in place in its pressure-resistant, explosion-proof container (from shipment of the filed device) but is not supplying power and to manipulate the field device so as to start supply of power from the battery without the need for opening the container.

According to one or more illustrative aspects of the present invention, there is provided a field device. as set out in independent claim 1. Advantageous developments are defined in the dependent claims.

Other aspects and advantages of the present invention will be apparent from the following description, the drawings and the claims.

### BRIEF DESCRIPTION OF THE DRAWINGS

Fig. 1 is a functional block diagram of a field device according to an embodiment of the invention;
Fig. 2 is a schematic diagram illustrating state transitions of the field device according to the embodiment;
Fig. 3 is a table showing the details of the state transitions;
Fig. 4 is a functional block diagram of a communication system in which wireless communication is performed between a higher-level device and field devices; and
Fig. 5 is a functional block diagram showing an example configuration of a conventional field device having a wireless communication unit.

### DETAILED DESCRIPTION

According to an embodiment of the invention, the following advantages are expected:
(1) The field device can be transported to the user in a state that the battery is set in place but is not capable of supplying power. The user can enable the battery to supply power with timing that is desired by the user without the need for opening and closing the pressure-resistant, explosion-proof container.
(2) The field device can be transported with the battery set in place. Since there is no probability of radio wave emission, violation of the radio law of each country during transport can be avoided.
(3) Battery energy consumption before a start of use of the field device can be avoided by enabling supply of power from the battery when use of the field device is started at an installation site.

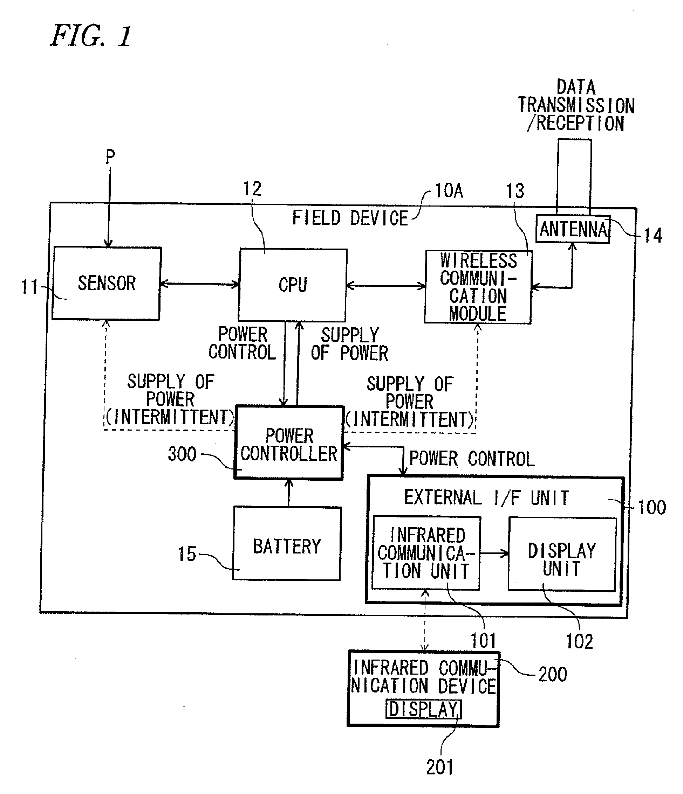

Exemplary embodiments of the present invention will be hereinafter described in detail with reference to the drawings. Fig. 1 is a functional block diagram of a field device 10A according to an embodiment of the invention. Components having the same or corresponding ones in the conventional field device 10 shown in Fig. 5 are given the same reference symbols and will not be described in detail.

Components that are added to the conventional field device 10 of Fig. 5 are an external interface unit 100 which is provided inside the field device 10A, an infrared communication device 200 which communicates with the external interface unit 100 from outside by infrared light, and a power controller 300 which is provided inside the field device 10A and controls connection/disconnection of the battery 15 by communicating with the external interface unit 100.

The external interface unit 100 includes an infrared communication unit 101 which communicates with the external infrared communication device 200 through a glass cover (not shown) that is provided in a window of a container and a display unit 102 which displays status information etc. of the field device 10A. The infrared communication device 200 may also be equipped with a display 201 which acquires and displays similar information.

With the above configuration, the power controller 300 controls the supply of power from the battery 15 to the individual components of the field device 10A by communicating with the external interface unit 100 which receives a battery-on or off instruction from the infrared communication device 200 by means of the infrared communication unit 101.

The user sends, for example, a setting signal for powering off the field device 10A using the infrared communication device 200. When receiving the setting signal, the infrared communication unit 101 of the external interface unit 100 provides it to the power controller 300.

If being in a standby state, the power controller 300 is activated by a setting signal supplied from the eternal interface unit 100, an external interrupt signal, or the like. If being in operation, the power controller 304 receives a setting signal. According to the power-off setting signal received from the external interface unit 100, the power controller 300 stops the supply of power to the sensor 11, the CPU 12, and the wireless communication module 13.

The power controller 300 turns on and off the supply of power to the external interface unit 100 at regular intervals (e.g., every 1 second) to allow it to detect infrared light. When the supply of power to the wireless communication module 13 from the power controller 300 is stopped, the wireless communication module 13 stops sending and reception of radio waves completely.

Furthermore, when the battery 15 is removed, the supply of power to the power controller 300 is shut off and the supply of power to the sensor 11, the CPU 12, and the wireless communication module 13 is stopped. The field device 10A may be configured so that when the battery 26 is inserted, the power controller 300 restarts supply of power to the sensor 11, the CPU 12, and the wireless communication module 13 irrespective of reception of an on/off signal from the CPU 12.

The display unit 102 can receive, from the power controller 300, information indicating whether or not the sensor 11, the CPU 12, and the wireless communication module 13 receive power and display operation statuses of the individual components of the field device 10A.

For example, if the wireless communication module 13 is not supplied with power, the field device 10A does not send or receive a radio signal. Therefore, such a phrase as "RF off" may be displayed on the display unit 102. This allows the user to easily recognize that the field device 10A is not emitting radio waves.

If neither the sensor 11 nor the wireless communication module 13 is supplied with power, such a phrase as "all off"' may be displayed on the display unit 102. This allows the user to easily recognize that the field device 10A is in a power saving mode.

The infrared communication unit 101 of the external interface unit 100 can inform operation statuses of the individual components of the field device 10A to the external infrared communication device 200. Therefore, the display 201 allows the user to recognize the same information as the display unit 102 does.

In this manner, the user can easily recognize that the field device 10A is not emitting radio waves or the field device 10A is in a power saving mode.

The power controller 300 can establish a standby state such as a power saving mode. The power controller 300 can cause a transition to a standby state by itself after it has operated for a prescribed time. The standby state can be canceled when an external interrupt signal, for example, is received from the external interface unit 100.

In addition to receiving a signal from the external infrared communication device 200 through the glass cover of the container and supplying it to the power controller 300, the infrared communication unit 101 can operate in place of the wireless communication module 13 to send a process value calculation result and a failure diagnosis result as produced by the CPU 12 to the infrared communication device 200 because the infrared communication unit 101 also has the function of sending a signal to the external power controller 300.

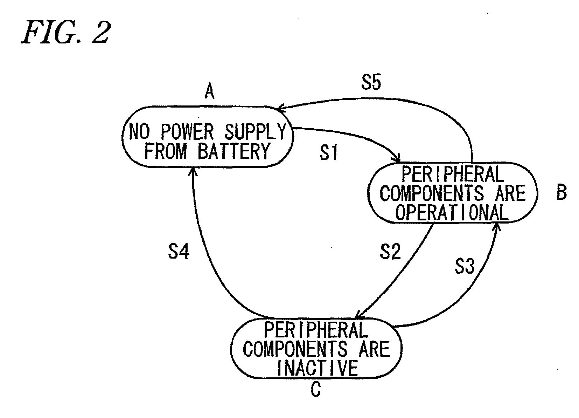

Fig. 2 is a schematic diagram illustrating state transitions of the field device 10A according to the embodiment. Symbol S1 denotes a transition from state A (no power supply from the battery 15) to state B (the peripheral components are operational) which is caused by insertion of the battery 15. Symbol S2 denotes a transition from state B to state C (the peripheral components are inactive) which is caused by reception of a power-off request by the infrared communication unit 101.

Symbol S3 denotes a transition from state C to state B which is caused by reception of a power-on request by the infrared communication unit 101. Symbol S4 denotes a transition from state C to state A which is caused by removal of the battery 15. Symbol S5 denotes state B to state A which is caused by removal of the battery 15.

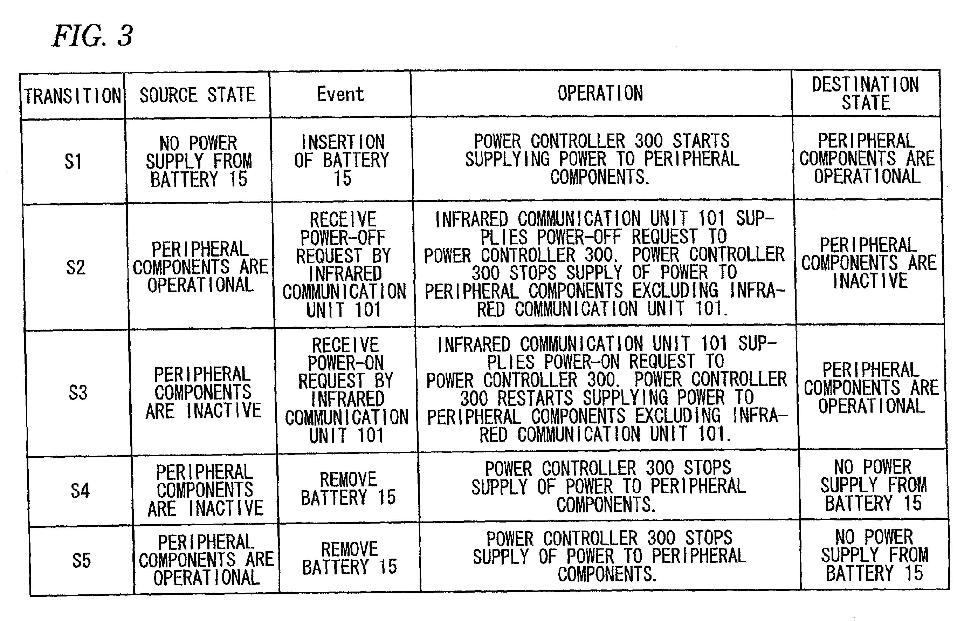

Fig. 3 is a table showing the details of the state transitions shown in Fig. 2. When transition S1 has occurred, the power controller 300 starts supplying power to the peripheral components.

When transition S2 has occurred, the infrared communication unit 101 supplies the received power-off request to the power controller 300 and the power controller 300 stops the supply of power to the peripheral components excluding the infrared communication unit 101.

When transition S3 has occurred, the infrared communication unit 101 supplies the received power-on request to the power controller 300 and the power controller 300 restarts supplying power to the peripheral components excluding the infrared communication unit 101.

When transition S4 has occurred, the power controller 300 stops the supply of power to the peripheral components. When transition S5 has occurred, the power controller 300 stops the supply of power to the peripheral components as in the case of transition S4.

Although in Fig. 1 the power controller 300 is regarded as an independent function, the management function of the power controller 300 may be provided in the CPU 12.

The display unit 102 of the external interface unit 100 is an LCD, for example. The infrared communication unit 101 may be provided on the LCD.

A process value calculation result and a diagnosis result of each component of the field device 10A that are produced by the CPU 12 may be supplied to the display unit 102 of the external interface unit 100 via the power controller 300, in which case information relating to each component of the field device 10A can be displayed on the display unit 102.

## Claims

1. A field device (10A), comprising:
a pressure-resistant and explosion-proof container;
a battery (15) as a power source;
an external interface unit (100) comprising:
an infrared communication unit (101) configured to communicate with an external infrared communication device (200) through a window attached to the container; and
a display unit (102) configured to display status information about the field device; and
the field device further comprising:
a power controller (300) configured to determine whether power from the battery should be switched on or off, in response to a request from the external interface unit,
**characterized in that**
the status information indicates one of: a first state in which the field device is inactive; a second state in which the field device is active; and a third state in which only the infrared communication unit is active,
the field device is configured to perform a transition from the first state to the second state when the battery is inserted in the field device,
the field device is configured to perform a transition from the second state to the third state in response to reception of a power-off request by the infrared communication unit,
the field device is configured to perform a transition from the third state to the second state in response to reception of a power-on request by the infrared communication unit,
the field device is configured to perform a transition from the third state to the first state when the battery is removed from the field device, and
the field device is configured to perform a transition from the second state to the first state when the battery is removed from the field device.

2. The field device (10A) according to claim 1, further comprising:
the battery (15) incorporated in the field device to activate the field device.

3. The field device (10A) according to claim 1, wherein the field device is usable in a dangerous atmosphere.

4. The field device (10A) according to claim 1, further comprising:
a sensor (11) configured to detect process quantity (P);
a calculator (12) configured to calculate process data based on the process quantity;
a wireless communication unit (13) configured to exchange radio signals with a higher-level device, wherein the wireless communication unit is configured to send at least one of the process data and the status information to the higher-level device and receive a request from the higher-level device.

5. The field device (10A) according to claim 4, wherein the display unit (102) is configured to display at least one of the process data and the status information.

6. The field device (10A) according to claim 1,
wherein the infrared communication unit (101) is configured to send the status information to the external infrared communication device (200) for being displayed on a display (201) of the external infrared communication device.

## Patentansprüche

1. Feldgerät (10A), aufweisend:
einen druckresistenten und explosionsgeschützten Behälter;
eine Batterie (15) als Energiequelle;
eine externe Schnittstelleneinheit (100), aufweisend:
eine infrarote Kommunikationseinheit (101), die konfiguriert ist, um mit einer externen infraroten Kommunikationsvorrichtung (200) durch ein an dem Behälter angebrachtes Fenster zu kommunizieren; und
eine Anzeigeeinheit (102), die konfiguriert ist, um Statusinformationen über das Feldgerät anzuzeigen; und
das Feldgerät ferner aufweist:
eine Energiesteuerung (300), die konfiguriert ist, um im Ansprechen auf eine Aufforderung von der externen Schnittstelleneinheit zu bestimmen, ob eine Energie von der Batterie ein- oder ausgeschaltet sein soll,
**dadurch gekennzeichnet, dass**
die Statusinformationen eines der Folgenden anzeigen: einen ersten Zustand, in welchem das Feldgerät inaktiv ist; einen zweiten Zustand, in welchem das Feldgerät aktiv ist; und einen dritten Zustand, in welchem nur die infrarote Kommunikationseinheit aktiv ist,
das Feldgerät konfiguriert ist, um einen Übergang von dem ersten Zustand in den zweiten Zustand durchzuführen, wenn die Batterie in das Feldgerät eingefügt ist,
das Feldgerät konfiguriert ist, um im Ansprechen auf einen Empfang einer Energie-Aus-Aufforderung durch die infrarote Kommunikationseinheit einen Übergang von dem zweiten Zustand in den dritten Zustand durchzuführen,
das Feldgerät konfiguriert ist, um im Ansprechen auf einen Empfang einer Energie-Ein-Aufforderung durch die infrarote Kommunikationseinheit einen Übergang von dem dritten Zustand in den zweiten Zustand durchzuführen,
das Feldgerät konfiguriert ist, um einen Übergang von dem dritten Zustand in den ersten Zustand durchzuführen, wenn die Batterie aus dem Feldgerät entfernt ist, und
das Feldgerät konfiguriert ist, um einen Übergang von dem zweiten Zustand in den ersten Zustand durchzuführen, wenn die Batterie aus dem Feldgerät entfernt ist.

2. Feldgerät (10A) nach Anspruch 1, ferner aufweisend:
die Batterie (15), die in dem Feldgerät enthalten ist, um das Feldgerät zu aktivieren.

3. Feldgerät (10A) nach Anspruch 1, wobei das Feldgerät in einer gefährlichen Atmosphäre verwendbar ist.

4. Feldgerät (10A) nach Anspruch 1, ferner aufweisend:
einen Sensor (11), der konfiguriert ist, um eine Prozessgröße (P) zu erfassen;
einen Rechner (12), der konfiguriert ist, um Prozessdaten basierend auf der Prozessgröße zu berechnen;
eine drahtlose Kommunikationseinheit (13), die konfiguriert ist, um Funksignale mit einem übergeordneten Gerät auszutauschen, wobei die drahtlose Kommunikationseinheit konfiguriert ist, um zumindest die Prozessdaten oder die Statusinformationen an das übergeordnete Gerät zu senden und eine Aufforderung von dem übergeordneten Gerät zu empfangen.

5. Feldgerät (10A) nach Anspruch 4, wobei die Anzeigeeinheit (102) konfiguriert ist, um zumindest die Prozessdaten oder die Statusinformationen anzuzeigen.

6. Feldgerät (10A) nach Anspruch 1,
wobei die infrarote Kommunikationseinheit (101) konfiguriert ist, um die Statusinformationen an die externe infrarote Kommunikationsvorrichtung (200) zu senden, um auf einer Anzeige (201) der externen infraroten Kommunikationsvorrichtung angezeigt zu werden.

## Revendications

1. Dispositif de terrain (10A), comprenant :
un contenant résistant à la pression et antidéflagrant ;
une batterie (15) en tant que source d'alimentation ;
une unité d'interface externe (100) comprenant :
une unité de communication infrarouge (101) configurée pour communiquer avec un dispositif de communication infrarouge externe (200) à travers une fenêtre fixée au contenant ; et
une unité d'affichage (102) configurée pour afficher des informations de statut concernant le dispositif de terrain ; et
le dispositif de terrain comprenant en outre :
un dispositif de commande d'alimentation (300) configuré pour déterminer si l'alimentation de la batterie devrait être allumée ou éteinte, en réponse à une demande en provenance de l'unité d'interface externe,
**caractérisé en ce que**
les informations de statut indiquent l'un parmi : un premier état dans lequel le dispositif de terrain est inactif ; un deuxième état dans lequel le dispositif de terrain est actif ; et un troisième état dans lequel seule l'unité de communication infrarouge est active,
le dispositif de terrain est configuré pour effectuer une transition du premier état au deuxième état lorsque la batterie est insérée dans le dispositif de terrain,
le dispositif de terrain est configuré pour effectuer une transition du deuxième état au troisième état en réponse à la réception d'une demande de mise hors tension par l'unité de communication infrarouge,
le dispositif de terrain est configuré pour effectuer une transition du troisième état au deuxième état en réponse à la réception d'une demande de mise sous tension par l'unité de communication infrarouge,
le dispositif de terrain est configuré pour effectuer une transition du troisième état au premier état lorsque la batterie est retirée du dispositif de terrain, et
le dispositif de terrain est configuré pour effectuer une transition du deuxième état au premier état lorsque la batterie est retirée du dispositif de terrain.

2. Dispositif de terrain (10A) selon la revendication 1, comprenant en outre :
la batterie (15) incorporée dans le dispositif de terrain pour activer le dispositif de terrain.

3. Dispositif de terrain (10A) selon la revendication 1, dans lequel le dispositif de terrain est utilisable dans une atmosphère dangereuse.

4. Dispositif de terrain (10A) selon la revendication 1, comprenant en outre :
un capteur (11) configuré pour détecter une quantité de traitement (P) ;
un calculateur (12) configuré pour calculer des données de traitement sur la base de la quantité de traitement ;
une unité de communication sans fil (13) configurée pour échanger des signaux radio avec un dispositif de niveau supérieur, où l'unité de communication sans fil est configurée pour envoyer au moins une des données de traitement et des informations de statut au dispositif de niveau supérieur et recevoir une demande en provenance du dispositif de niveau supérieur.

5. Dispositif de terrain (10A) selon la revendication 4, dans lequel l'unité d'affichage (102) est configurée pour afficher au moins une des données de traitement et des informations de statut.

6. Dispositif de terrain (10A) selon la revendication 1, dans lequel l'unité de communication infrarouge (101) est configurée pour envoyer les informations de statut au dispositif de communication infrarouge externe (200) pour être affichées sur un afficheur (201) du dispositif de communication infrarouge externe.
